# EUROPÄISCHE PATENTSCHRIFT

(11) **EP 2 601 349 B1**
(45) Veröffentlichungstag und Bekanntmachung des Hinweises auf die Patenterteilung: **28.12.2016**
(21) Anmeldenummer: 11741130.6
(22) Anmeldetag: 05.08.2011
(51) Int. Cl.: E01B 23/00, F16M 11/26, F16M 11/42, G03B 17/56

(54) **SCHIENENSYSTEM MIT STÜTZBESCHLAG ZUM HÖHENVERSTELLBAREN ABSTÜTZEN EINER TRAG- UND FÜHRUNGSSCHIENE**
TRACK SYSTEM WITH SUPPORT FITTING FOR HEIGHT-ADJUSTABLE SUPPORT OF A BEARING AND GUIDING RAIL
SYSTÈME DE RAIL AVEC FERRURE DE SUPPORT DESTINÉE AU SUPPORT RÉGLABLE EN HAUTEUR D'UN RAIL DE SUPPORT ET DE GUIDAGE

(30) Priorität: 05.08.2010 DE 102010033533
(43) Veröffentlichungstag der Anmeldung: 12.06.2013
(73) Patentinhaber: Panther Gmbh, 82041 Oberhaching (DE); Karl, Michael, 82131 Gauting (DE)
(72) Erfinder: KARL, Michael, 82131 Gauting (DE)
(74) Vertreter: Leinweber & Zimmermann
(86) Internationale Anmeldenummer: PCT/EP2011/003947
(87) Internationale Veröffentlichungsnummer: WO 2012/016714

(56) Entgegenhaltungen:
- WO-A1-2007/145542
- DE-A1-102007 014 944
- DE-U1- 9 316 317

## Beschreibung

Die vorliegende Erfindung betrifft ein Schienensystem aus zwei im Wesentlichen äquidistant zueinander verlaufenden Schienen unter Verwendung eines Stützbeschlags zum höhenverstellbaren Abstützen einer im Wesentlichen horizontal verlaufenden Tragschiene und/oder Führungsschiene, insbesondere einer Schiene für Kamerawagen, Kamerakräne etc.

Im Rahmen von Film- und Fernsehaufnahmen werden Kamerabewegungen unter Anderem auch unter Zuhilfenahme sogenannter Kamera-Dollys (Kamerafahrwagen) und Kamerakränen umgesetzt. Um eine ruhige Kamerabewegung realisieren zu können, werden derartige Dollys oder Kräne bei unebenem Untergrund in der Regel auf Schienensystemen bewegt. Um diese Schienen bei unebenem Untergrund schnell und flexibel verlegen und insbesondere nivellieren zu können, ist es bekannt, die Schienen mit Keilen, Platten, Kisten oder anderen Hilfsmitteln in geeigneter Weise zu unterbauen. Diese Hilfsmittel werden gegebenenfalls auch in Kombination untereinander aufeinandergesetzt, um die jeweilige Höhe zwischen Untergrund und Schiene zum Niveauausgleich zu überbrücken.

Diese mechanischen Hilfsmittel zum Ausrichten und Nivellieren der Schienen werden als Unterbau bezeichnet.

Auf Grund der häufig wechselnden Einsatzorte (Innen- und Außenbereiche), sowie der oft anspruchsvollen baulichen oder natürlichen Gegebenheiten (z.B. Treppen, Felsen etc.) ist es wichtig, dass der Auf- und Abbau der Schienen oder Schienensysteme zusammen mit dem jeweiligen Unterbau individuell, sicher und mit geringem Zeitbedarf erfolgen kann. Die Sicherheit des Unterbaus stellt einen wesentlichen Faktor dar, da auf Schienen für Kamera-Dollys oder Kamera-Kräne zum Teil sehr hohe Lasten in der Größenordnung bis zu 2000 kg bewegt werden.

Die Bestandteile des Unterbaus müssen demzufolge je nach Bedarf entsprechend dimensioniert werden, also entsprechend groß und/oder stabil sein, wobei darüber hinaus durch das Vorsehen verschiedener Unterbauteile möglichst viele Einsatzorte durch eine Kombination verschiedener Größen abgedeckt werden müssen.

Es ist daher üblich, an Drehorten eine große Anzahl derartiger Unterbauteile in unterschiedlichen Größen und Formen bereitzustellen. Bei einem Wechsel des Drehorts muss dieser Fundus in aufwändiger Weise mitgeführt und am neuen Drehort individuell den jeweiligen Anforderungen entsprechend wieder aufgebaut werden, um eine Schiene in gewünschter Weise verlegen zu können.

Diese Vorgehensweise ist daher umständlich, zeit- und kostenaufwändig. Außerdem wird die oft benötigte Stabilität und Sicherheit des Unterbaus nur unzureichend gewährleistet.

Besteht die Notwendigkeit, am Drehort Schienen zu verlegen, gilt als grober Anhaltswert, dass diese Schienen zu 90 Prozent unterbaut werden müssen, da der Untergrund so gut wie nie völlig eben ist. Für den Ausgleich von Höhenunterschieden, die teilweise einen Meter oder mehr betragen können, müssen dann unterschiedlichste Teile aus dem Unterbaufundus mit unterschiedlichen Maßen aufeinandergestellt werden, um zunächst eine grobe Annäherung oder Herantastung an die erforderliche Nivellierhöhe zu haben. Verbleibende kleinere Restdistanzen werden dann mit Keilen oder Platten unterschiedlicher Größe und/oder Dicke ausgeglichen.

Durch den stets herrschenden Zeitdruck bei Filmaufnahmen kommt es daher beim Verlegen der Schienen auf Grund geringer Erfahrung oder Unachtsamkeit immer wieder zu Unfällen, wenn der Unterbau der Schienen der Belastung der Dollys und Kräne nicht standhält, da der Unterbau durch die Komplexität und Instabilität der Kombination verschiedener Unterbauteile (Kisten, Platten, Keile etc.) bei verschiedensten Untergründen stets als eine Art Kompromiss oder Gratwanderung zwischen den Hauptanforderungen Stabilität und Sicherheit einerseits und Zeit- und Kosteneffizienz andererseits darstellt.

Es ist bekannt, dass es immer wieder zu erheblichen Personenschäden kommt, da auf den Schienen zusammen mit den Dollys oder Kränen auch Personen (Kameramänner, - assistenten etc.) bewegt werden.

Aus der GB 2 274 820 A ist ein Schienensystem für Kamera-Dollys bekannt geworden, bei dem anstelle eines konstruktiv oftmals bedenklichen Unterbaus aus Kisten oder dergleichen ein Metallgerüst das Schienensystem trägt. Das Schienensystem selbst besteht aus zwei im Abstand und parallel zueinander verlaufenden Schienen mit rundem Querschnitt, auf denen der Dolly (der Kran etc.) mit einem entsprechend gestalteten Fahrgestell abrollt. Die Schienen ruhen unter Zuhilfenahme entsprechender Lager- oder Unterzugelemente auf Schwellen oder Traversen, welche beidseits seitlich über das auf den beiden Schienen gebildeten Gleis oder Schienensystem hinaus ragen. In diesen seitlich ausragenden Bereichen der Traversen oder Schwellen sind vertikal, also im Wesentlichen senkrecht zum Schienenverlauf angeordnete Stützbeine angeschlagen, wobei jedes dieser Stützbeine einer Rasterung folgend teleskopierbar ist und an seinem unteren freien Ende einen über eine Gewindespindel verstellbaren Auflageteller aufweist. Jeweils zwei derartiger Stützbeine und eine horizontal dazwischen verlaufende Traverse oder Schwelle bilden eine Stütze zum Unterfangen der Schienen, wobei die Spitze jeweils durch die gerasterte Teleskopierbarkeit ihrer Stützbeine zunächst grob und dann durch die Spindelverstellung fein höhenverstellbar und nivellierbar ist.

Zur Erzielung einer höheren Stabilität sind die beiden Stützbeine eines Stützelementes untereinander, sowie gegebenenfalls einander in Verlaufsrichtung der Schiene benachbart Stützelemente durch zusätzliche Streben oder Verspannungen gegeneinander abgestützt und ausgesteift.

In der Praxis kann durch den Gegenstand der GB 2 274 820 auf vor Ort aus unterschiedlichen Hilfsmitteln konstruierte Unterbauten mit den damit einhergehenden Logistik-und Sicherheitsproblemen verzichtet werden, da der gesamte Unterbau aus einheitlichen Stützelementen konstruiert ist, welche je nach den örtlichen Gegebenheiten entsprechend grob und dann fein eingestellt (d.h. höhenverstellt) werden können, um die Schienen in einer gewünschten Höhenlage und/oder Ausrichtung abstützen und nivellieren zu können. Die die einzelnen Stützelemente bildenden Bauteile sind hierbei soweit als möglich vereinheitlicht, sodass es nicht länger notwendig ist, einen umfangsreichen Fundus unterschiedlich dimensionierter und gestalteter Hilfsbauelemente (Kisten, Platten, Keile etc.) mitzuführen.

Insofern stellt der Gegenstand der GB 2 274 820 gegenüber der bisherigen Vorgehensweise eine Steigerung hinsichtlich Effizienz, Kostenersparnis und erhöhter Sicherheit dar.

Nachteilig bei dem Gegenstand der GB 2 274 820 ist, dass die zwischen den beiden Schienen des Gleises verlaufenden Traversen oder Schwellen neben ihrer Funktion, die beiden Schienen parallel zueinander und im gleichen Abstand zu einander zu halten, gleichzeitig die tragende Funktion zwischen Unterbau und Schienen ausüben: die beiden Stützbeine sind an den beidseits über die äußere Begrenzungslinie der Schienen hinaus stehenden Abschnitte der Traversen angeschlagen. Die beiden Schienen ruhen auf der Oberseite der jeweiligen Traverse jeweils weiter nach innen hin versetzt, sodass bei einer Gewichtsbelastung der Schienen diese Gewichtsbelastung auf die darunterliegende Schwelle übertragen wird. Dadurch, dass die Stützbeine außerhalb der Schiene liegen, erfolgt durch die Gewichtsbelastung eine Durchfederung der Schwelle, sofern diese nicht hinreichend stabil und damit biegesteif ausgebildet ist. Darüber hinaus muss die Befestigung zwischen Schwelle und Stützbein eine Momentenbelastung aufnehmen.

Durch die Notwendigkeit, die Schwelle ausreichend biegesteif zu konstruieren, damit die auftretenden Gewichtsbelastungen sicher von der Schwelle aufgenommen und auf die Stützbeine übertragen werden können, ohne dass hierbei die Schwelle merklich durchfedert, erhöht sich der Aufwand an Material und Kosten zur Herstellung der Schwellen. Darüber hinaus werden die Schwellen in nachteiliger Weise schwer und damit entsprechend umständlicher zu handhaben und zu transportieren. Schließlich tragen die schweren Schwellen in nachteiliger Weise zur Gewichtsgesamtbelastung des Unterbaus bei.

Schienensysteme für Kamera-Dollys sind auch bekannt aus folgenden Druckschriften:DE 10 2007 014 944 A1, WO 2007/145542 A1, US 2005/0231689 A1, DE 20 2004 007 518 U1 und US 3,598,355. Andere Schienensysteme sind bekannt aus folgenden Druckschriften: US 3,261,550, und US 4,607,574. Schließlich zeigen folgende Druckschriften Abstürzsysteme: DE 1 855 542, DE 801 537 und DE 810 428.

Das aus DE 93 16 317 U bekannte Schienensystem offenbart sämtliche Merkmale des Oberbegriffs des Anspruchs 1. Dem gegenüber hat es sich die vorliegende Erfindung zur Aufgabe gemacht, einen Stützbeschlag der in Frage stehenden Art so auszubilden, dass unter Verbesserung an Stabilität und damit an Sicherheit ein besserer Bedienkomfort und eine Gewichtseinsparung erreicht werden.

Zur Lösung dieser Aufgabe schlägt die vorliegende Erfindung gemäß Anspruch 1 einen Stützbeschlag zum höhenverstellbaren Abstützen einer im Wesentlichen horizontal verlaufenden Trag- und Führungsschiene, insbesondere Schiene für Kamerawagen oder dergleichen, vor, wobei der Stützbeschlag einen Beschlagkörper aufweist, der seinerseits im Bereich einer als Oberseite definierten Seite eine Auflagefläche zum direkten oder indirekten Unterfangen der Schiene aufweist. Der Beschlagkörper weist weiterhin an einer als Unterseite definierten, der Oberseite gegenüberliegenden Seite Aufnahme- und/oder Befestigungsmittel zum Festlegen wenigstens eines Stützelementes auf, mit welchem der Stützbeschlag gegenüber einer Standfläche in einer bestimmten Höhenlage abstützbar ist.

Beim Gegenstand der vorliegenden Erfindung stellt demnach der Stützbeschlag mit seinem Beschlagkörper einen funktionellen Knoten dar, der mehrere konstruktive Funktionen in sich vereint, nämlich die Abstützung (direkt oder indirekt, wobei die Aussage hinter "direkt" und "indirekt" nachfolgend noch erläutert wird) der Schiene durch Unterfangen der Schiene mit der Auflagefläche an der Oberseite, die Abstützung des Beschlagkörpers selbst und damit der hierauf ruhenden Schiene durch das wenigstens eine Stützelement, das sich an den der Oberseite gegenüberliegenden Aufnahme- und/oder Befestigungsmitteln angeordnet sind, wobei diese Stützelemente eine Abstützung in einer bestimmten Höhenlage erlauben.

Unter einer "direkten" Unterfangung der Schiene mit der Auflagefläche am Beschlagkörper sei im Rahmen der vorliegenden Erfindung der Sachverhalt verstanden, dass die Schiene eigenstabil und selbsttragend ist, beispielsweise in Form eines entsprechend oberflächenbehandelten Stahlrohrs mit in der Regel rundem Querschnitt vorliegt. Derartige Schienen können hinreichend eigenstabil sein im Gegensatz zu Schienen aus einem Leichtmetall oder dergleichen, welche zur Erzielung der notwendigen Eigenstabilität und Steifigkeit einen sogenannten Unterzug benötigen, der den eigentlichen Schienenkörper hinreichend aussteift. Bei einer "indirekten" Unterfangung der Schiene durch die Auflagefläche erfolgt besagte Unterfangung unter Anordnung des Unterzugs zwischen Schiene und Auflagefläche, d.h. es ist der Unterzug, der auf der Auflagefläche zu liegen kommt.

Der Oberseite gegenüber liegend sind am Beschlagkörper die Aufnahme- und/oder Befestigungsmittel zum Festlegen wenigstens eines Stützelements angeordnet oder ausgebildet. Dies bedeutet, dass das Stützelement direkt an den Beschlagkörper und nicht an einer zwischen zwei Schienen verlaufenden Traverse oder Schwelle angreift, also besagte Traversen oder Schwellen beim Gegenstand der vorliegenden Erfindung nur die Funktion als Abstandhalter zwischen den beiden parallel und äquidistant verlaufenden Schienen erfüllen müssen. Sie übernehmen keinerlei tragende Funktion und müssen insbesondere keine auf die Schienen wirkenden Gewichtsbelastungen von einem Dolly oder Kamerakran oder dergleichen aufnehmen und auf das Stützelement oder die Stützelemente ableiten. Folglich können die Traversen oder Schwellen von Material und Dimensionierung her ausschließlich auf ihre Abstandhalterfunktion hin optimiert werden, also insbesondere schlanker und damit leichter und auch kostengünstiger ausgebildet werden. Im Endeffekt bedeutet dies eine gegenüber dem Stand der Technik Kosten- und Gewichtsersparnis. Weiterhin bietet der erfindungsgemäße Stützbeschlag eine erhöhte Stabilität und damit Sicherheit und weiterhin einen verbesserten Bedienkomfort (Platzbedarf bei Transport und im aufgebauten Zustand).

Gegenstand der vorliegenden Erfindung ist weiterhin gemäß Anspruch 2 ein Schienensystem, wobei die Trag- und Führungsschiene zur Verstärkung einen Unterzug hat, an dem der Stützbeschlag außerhalb einer Vertikalebene der Schiene befestigt oder befestigbar ist.

Der Beschlagkörper weist zwischen Ober- und Unterseite wenigstens ein Anschlagemittel für unter der Auflagefläche verlaufende Verbindungsbauteile auf.

Damit ist folgende weitere konstruktive Funktion im Beschlagkörper integriert: es können z.B. Traversen oder Schwellen, welche im Wesentlichen unter der Auflageflächen verlaufen, seitlich am Beschlagkörper angebracht werden. Da der Beschlagkörper bei diesem Ausführungsbeispiel wiederum direkt oder auch indirekt an der Schiene bzw. den Schienen befestigt ist, erfolgt hierdurch eine äquidistante und parallele Anordnung der Schienen.

Bevorzugt ist beim direkten Unterfangen der Schiene die Auflagefläche an zumindest einem Teilbereich der Schienenumfangskontur für eine Flächenanlage hiermit angepasst. Hierdurch wird mit konstruktiv einfachen Mitteln eine erste Lagefixierung der Schiene gegenüber der Auflagefläche erzielt.

Entsprechend ist bevorzugt beim indirekten Unterfangen der Schiene die Auflagefläche an zumindest einem Teilbereich des Unterzugs der Schiene für eine Flächenanlage hiermit angepasst.

Bevorzugt ist vorgesehen, daß die Unterseite der Aufnahme- und/oder Befestigungsmittel oberhalb der Unterseite der Schiene, eines Unterzugs der Schiene und/oder einer Schwelle liegt oder mit der Unterseite eines der genannten Elemente fluchtet. Auf diese Weise ist sichergestellt, daß die minimal mögliche Höhe der Schienenoberkante nicht von den Aufnahme- und/oder Befestigungsmitteln beeinträchtigt wird. Ragen sie nämlich über beispielsweise die Unterseite des Unterzugs der Schiene hinaus, so kann das Schienensystem nicht mehr mit der Unterseite des Unterzugs auf den Boden gelegt werden.

Bevorzugt verläuft die Längsachse der Aufnahme- und/oder Befestigungsmittel für das wenigstens eine Stützelement im Wesentlichen durch den Flächenschwerpunkt der Auflagefläche. Dies bedeutet in der Praxis, dass insbesondere beim direkten Unterfangen der Schiene, jedoch in der Mehrzahl der Fälle auch beim indirekten Unterfangen unter Zwischenschaltung eines Unterzugs der Flächenschwerpunkt des Schienenquerschnitts, der Flächenschwerpunkt der Auflagefläche und die Längsachse der Aufnahme- und/oder Befestigungsmittel im Wesentlichen auf einer Linie fluchtend liegen. Die Krafteinleitung von Gewichtskräften eines auf der Schiene abrollenden Dollys oder Kamerawagens erfolgt somit im Idealfall vertikal nach unten durch den Flächenschwerpunkt der Auflagefläche in die Längsachse der Aufnahme- und/oder Befestigungsmittel, d.h. ohne seitliche Kraftkomponenten, welche Knickmomente in den Befestigungsmitteln oder dem Stützelement hervorrufen können. Hierdurch ist es möglich, auch größere Lasten zuverlässig abzustützen.

Die Aufnahme- und/oder Befestigungsmittel zum Festlegen des wenigstens einen Stützelements sind bevorzugt als eine Steckbuchse an dem Beschlagkörper ausgebildet. Ein zu der Steckbuchse komplementär ausgeführtes Steckteil seitens des Stützelements wird in die Steckbuchse eingeführt und mit dem Beschlagkörper verbunden. Dabei ist das Stützelement in der Steckbuchse derart anordenbar, dass seine Längsachse zur Auflagefläche im Wesentlichen senkrecht steht. Dies stellt eine in der Praxis einfach zu handhabende und funktionssichere Ausgestaltungsform dar.

Bevorzugt sind hierbei an der Steckbuchse Klemmmittel vorgesehen, mit welchen das Stützelement bzw. dessen Einsteckteil in der Steckbuchse festklemmbar ist. Dies stellt einerseits eine Lagesicherung des Stützelements gegenüber der Steckbuchse dar und bietet andererseits die Möglichkeit, im Bereich der Steckbuchse eine Feineinstellung oder Nivellierung des gesamten Schienenstrangs vorzunehmen, wie nachfolgend noch näher erläutert werden wird.

Um dabei eine besonderer haltbare Fixierung zu erreichen wird es bevorzugt, wenn die Steckbuchse umlaufende Riefen hat/haben. Damit kann bei der Klemmung ein zusätzlicher Formschluss erzeugt werden.

Wenn die Steckbuche eine Klappabschnitt hat, der über ein Scharnier an der Steckbuchse klappbar befestigt ist, kann das Stützelement seitlich in die Steckbuchse eingesetzt werden. Danach kann der Kappabschnitt zugeklappt und verriegelt werden, so dass das Stützelement im erfindungsgemäßen Stützbeschlag eingespannt ist. Vorzugsweise ist dabei eine Schwenkachse des Scharniers senkrecht zu den Schienen ausgerichtet.

Alternativ zur Klemmtechnik kann eine Gewindeverbindung vorgesehen werden, bei der das Stützelement über einen Gewindeabschnitt in das Befestigungsmittel einschraubbar ist. Damit ist auch die Höhenjustierung des erfindungsgemäßen Stützbeschlags über die Gewindeverbindung durchgeführt werden.

Die Anschlagemittel für die im Wesentlichen in der gleichen Ebene wie die Auflagefläche verlaufenden Verbindungsbauteile sind bevorzugt Befestigungsflansche und/oder Befestigungsbohrungen. Hierbei sind erfindungsgemäß wenigstens drei Anschlagemittel vorgesehen, wobei zwei hiervon in einer mit einer Längsachse der Auflagefläche fluchtenden Ebene liegen und das dritte im rechten Winkel hierzu steht. Die beiden mit der Längsachse der Auflagefläche fluchtenden Anschlagemittel erstrecken sich somit in Verlaufsrichtung der Schiene bzw. weisen in diese Verlaufsrichtung und das dritte Anschlagemittel, das im rechten Winkel hierzu steht, kann bevorzugt zur Anbringung einer zwischen den Schienen verlaufenden Traverse oder Schwelle verwendet werden. An den zwei mit der Längsachse der Auflagefläche fluchtenden Anschlagemitteln können Schienenunterzüge bei der direkten Unterfangung einer Schiene oder sonstige Aussteifungs- oder Hilfsmittel befestigt werden.

Weitere Einzelheiten, Aspekte und Vorteile der vorliegenden Erfindung ergeben sich besser aus der nachfolgenden Beschreibung anhand der Zeichnung.

Es zeigt:
Fig. 1 eine perspektivische Ansicht eines Ausschnitts aus einem Schienensystem, das unter Verwendung zweier Schienen, einer Mehrzahl von Stützbeschlägen und dazwischen laufenden Traversen oder Schwellen aufgebaut ist;
Fig. 2 eine Schnittansicht entlang Linie II-II in Fig. 3 auf den Stützbeschlag bzw. Beschlagkörper gemäß der vorliegenden Erfindung mit schematisch angedeuteten, an Anschlagemittel angebrachten Bauteilen;
Fig. 3 eine Ansicht auf den erfindungsgemäßen Stützbeschlag bzw. Beschlagkörper in Richtung des Pfeils III in Fig. 2;
Fig. 4 eine Draufsicht auf zwei Schienen mit hieran angebrachten Stützbeschlägen und dazwischen laufenden Traversen oder Schwellen in einem beigeklappten Zustand;
Fig. 5 eine schematische Seitenansicht auf eine Schienenstrecke;
Fig. 6 eine schematische Darstellung eines als teleskopierbares Stützbein ausgebildeten Stützelements zur Verwendung bei der vorliegenden Erfindung;
Fig. 7 Beispiele von bei der vorliegenden Erfindung verwendbaren Stützelementen und
Fig. 8 schematisch ein weiteres Ausführungsbeispiel der Erfindung.

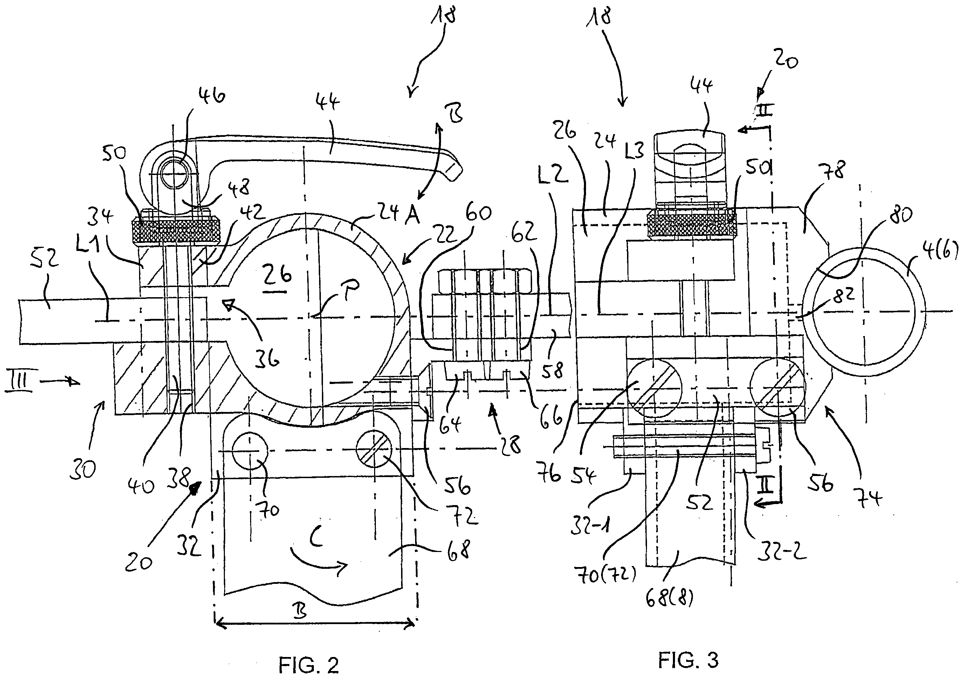

Die einzelnen Figuren der zeichnerischen Darstellung sind untereinander (mit Ausnahme der Figuren 2 und 3) nicht maßstäblich. Weiterhin ist der Gegenstand der vorliegenden Erfindung nicht auf die zeichnerisch konkret dargestellten Ausführungsformen beschränkt, da die Zeichnung als rein illustrativ und den Grundgedanken der vorliegenden Erfindung erläuternd und diese als nicht einschränkend zu verstehen ist.

Weiterhin sei in der nachfolgenden Beschreibung zwischen "Schiene" und "Gleis" oder "Schienensystem" zu differenzieren: unter "Schiene" ist ein einzelner Schienenkörper zu verstehen. Zur Bildung eines "Gleises" oder "Schienensystems" sind zwei derartiger Schienen im Abstand zueinander und parallel zueinander verlaufend anzuordnen, wobei zur Aufrechterhaltung von Abstand und Parallelität zwischen den beiden Schienen Traversen oder Schwellen angeordnet werden.

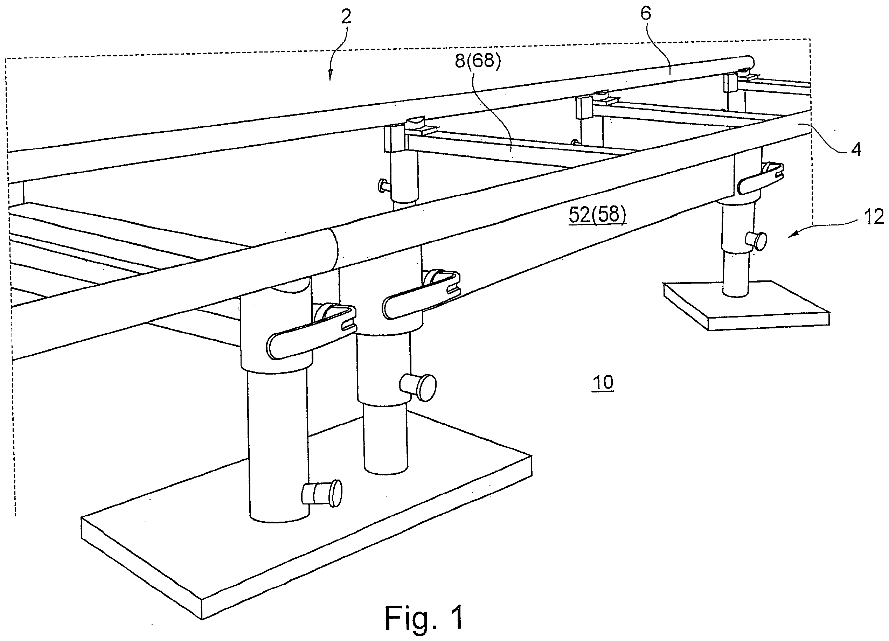

Fig. 1 zeigt eine perspektivische Darstellung eines derartigen Schienensystems oder Gleises 2, das gebildet ist aus zwei Schienen 4 und 6, die zueinander parallel in einem bestimmten Abstand verlaufend angeordnet sind. Zur Aufrechterhaltung von Abstand und Parallelität sind zwischen den Schienen 4 und 6 Traversen oder Abstandhalter, nachfolgend "Schwellen" genannt, angeordnet, welche mit den Bezugszeichen 8 versehen sind.

Die nachfolgende Beschreibung bezieht sich auf eine der beiden Schienen 4 und 6, nämlich die Schiene 4; die hierzu gemachten Aussagen betreffen - soweit nicht anderweitig angegeben - in äquivalenter Weise auch auf die Schiene 6 zu.

Die Schiene 4 ist im dargestellten Ausführungsbeispiel in Form eines Stahlrohrs mit rundem Querschnitt ausgebildet. Die runde Querschnittsform bzw. ein Teilabschnitt des Außenumfangs der Schiene 4 definiert eine Lauffläche, auf der entsprechend ausgebildete Laufrollen eines Kamerawagens (Dolly), Kamerakrans oder dergleichen laufen. Die hierzu verwendeten Technologien sind ausführlich dokumentiert und bekannt und da sie insbesondere nichts Wesentliches zum Gegenstand der vorliegenden Erfindung beitragen, wird auf eine nähere Erläuterung hiervon verzichtet.

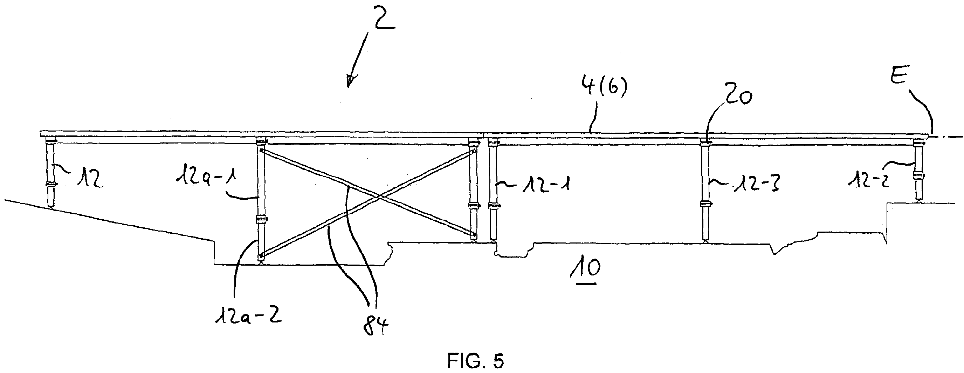

Wie bereits eingangs erläutert, ist es beim Verlegen des Gleises 2 wesentlich, dass neben der Parallelität und konstanten Beabstandung der Schienen 4 und 6 auch eine entsprechende Nivellierung insofern stattfindet, als das Gleis 2 gegenüber einem Untergrund 10 (Fig. 5) einen durchgängig ebenen Verlauf entlang einer Ebene E aufweist. Die Ebene E kann hierbei horizontal, d.h. "im Wasser" liegen oder sie kann eine leichte Steigung oder ein leichtes Gefälle zeigen. Auf jeden Fall ist beim Errichten des Gleises 2 darauf zu achten, dass die beiden Schienen 4 und 6 gegenüber dem Untergrund 10 entsprechend nivelliert, d.h. ausgerichtet werden, damit ein auf den Schienen 4 und 6 laufender Kamerawagen sanft, d.h. ruckfrei und mit geringem Kraftaufwand bewegt werden kann, um saubere Kamerafahrten zu ermöglichen. Außerdem müssen die stirnseitig aneinander liegenden Schienen in einer Ebene liegen.

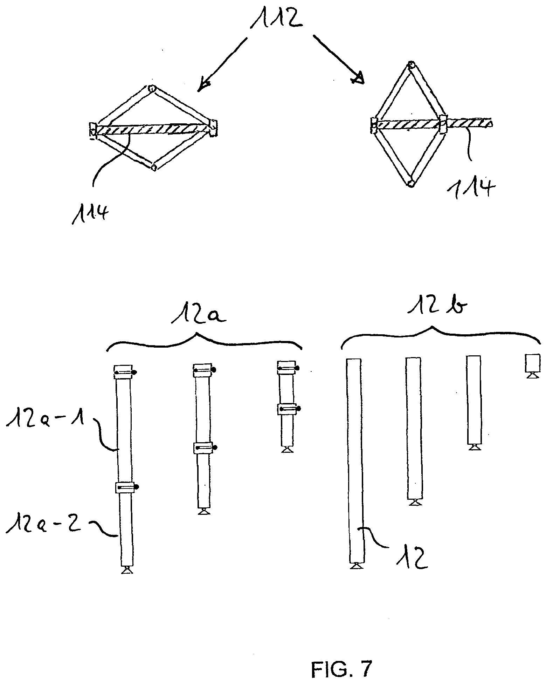

Zur Erzielung einer derartigen Ausrichtung oder Nivellierung ist das Gleis 2 gegenüber dem Untergrund 10 durch eine Mehrzahl von Stützelementen 12 unterschiedlicher Länge abgestützt, wie wieder am besten aus Fig. 1 und 5 hervorgeht. Die Stützelemente 12 sind im dargestellten Ausführungsbeispiel rohrförmige Stützbeine, die zur Erzielung der notwendigen Nivellierung des Gleises 2 entweder teleskopierbar (12a in Fig. 7) oder von konstanter, jedoch unterschiedlich dimensionierter Länge (12b in Fig. 7) sind. Weiterhin sind Kombinationen der Ausführungsmöglichkeiten 12a und 12b möglich.

Fig. 5 zeigt, wie zur Anpassung des Gleises 2 an den unregelmäßig konturierten Untergrund 10 verschiedene Stützelemente 12 unterschiedlicher Baulänge und mit unterschiedlichem Teleskopiergrad zum Einsatz gelangen.

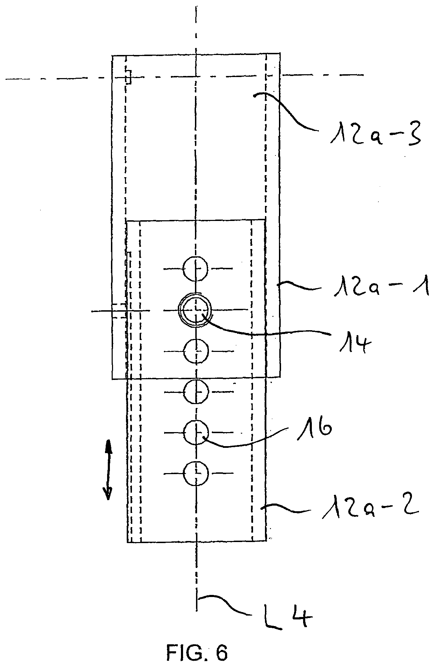

Ein teleskopierbares Stützelement 12a ist schematisch in Fig. 6 dargestellt und umfasst ein Außenrohr 12a-1 und ein hierin gleitbeweglich aufgenommenes Innenrohr 12a-2. Das Außenrohr 12a-1 weist in seiner Außenwandung wenigstens eine Öffnung 14 auf, und das Innenrohr 12a-2 weist in seiner Außenwandung eine Mehrzahl von Öffnungen 16 auf. Indem eine der Öffnungen 16 des Innenrohrs 12a-2 mit der Öffnung 14 im Außenrohr 12a-1 in Fluchtung gebracht wird und ein Bolzen oder dergleichen durch die beiden Öffnungen 14 und 16 geschoben wird, können unterschiedlich tiefe Einsteckbeträge des Innenrohrs 12a-2 im Außenrohr 12a-1 gewählt und festgelegt werden. Dadurch und gegebenenfalls in Verbindung mit unterschiedlich lang ausgebildeten Außenrohren und Innenrohren kann nach Art eines Bausatzes ein vergleichsweise großer Längenbereich für die Stützelemente 12 in einer dem Abstand der Öffnungen 16 entsprechenden Rasterung abgedeckt werden. Durch diese rasterartige Längenverstellbarkeit der einzelnen Stützelemente 12 ist zumindest eine Grobausrichtung oder Grundnivellierung des Gleises 2 gegenüber dem Untergrund 10 möglich. Für eine Feinausrichtung oder Endnivellierung des Gleises 2 verfügt der erfindungsgemäße Stützbeschlag 18 noch über eine Feineinstellmöglichkeit, auf welche nachfolgend noch näher eingegangen werden wird.

Insbesondere anhand der Figuren 2 und 3 wird nachfolgend der erfindungsgemäße Stützbeschlag 18 bzw. dessen Beschlagkörper 20 näher erläutert.

Der Beschlagkörper 20 ist bevorzugt durch entsprechende spanabhebende Bearbeitungen aus einem Stück gefertigt und umfasst im Wesentlichen einen mittigen oder zentralen Block 22, der im Wesentlichen in Form einer Hülse ausgebildet ist, welche in der Ansicht gemäß Fig. 2 begrenzt ist von einem kreisbogenförmig verlaufenden Wandabschnitt 24, der in seinem Inneren eine hohlzylindrische Steckbuchse 26 definiert. Die Steckbuchse 26 dient zur Aufnahme eines oberen Endabschnitts 12a-3 des Außenrohrs 12a-1 gemäß Fig. 6, d.h. der Innendurchmesser der Steckbuchse 26 entspricht im Wesentlichen dem Außendurchmesser des oberen Endabschnitts 12a-3.

Vom Außenumfang des Wandabschnitts 24 stehen gemäß den Figuren 2 und 3 radial Anschlagemittel vor, nämlich in der Ansicht bzw. Terminologie von Fig. 2 ein rechtes Anschlagemittel 28, ein linkes Anschlagemittel 30 und ein hierzu jeweils im rechten Winkel stehendes unteres Anschlagemittel 32. Es sei ausdrücklich darauf hingewiesen, dass sich die Begriffe "rechts", "links", sowie "unten" alleine auf die zeichnerische Darstellung von Fig. 2 beziehen und nicht auf eine konkrete Einbaulage des Beschlagkörpers 20.

Gegenüber dem linken Anschlagemittel 30 ist ausgehend von dem Wandabschnitt 24 ein Flansch 34 ausgebildet, wobei zwischen dem Flansch 34 und dem Anschlagemittel 30 der Wandabschnitt 24 in der aus Fig. 2 ersichtlichen Weise durch einen Schlitz oder eine Aussparung 36 unterbrochen ist.

Im Bereich des linken Anschlagemittels 30 ist in eine dortige Gewindebohrung 38 ein Gewindebolzen 40 eingeschraubt, der auf Seiten des Flansches 34 eine dortige Bohrung 42 mit Spiel durchsetzt. Am freien Ende des Bolzens 40 im Bereich der Bohrung 42 ist ein Hebel 44 vorgesehen, der über eine exzentrische Bohrung 46 mit dem freien Ende des Bolzens 40 schwenkbeweglich verbunden ist. Der Hebel 44 weist einen ballig ausgebildeten Abschnitt 48 auf, der unter Zwischenschaltung einer Reibscheibe 50 gegen die Außenfläche des Flansches 34 drückt.

Auf Grund der balligen Ausbildung des Abschnitts 48 und der exzentrischen Lagerung des Hebels 44 an der Bohrung 46 erfolgt bei einer Verschwenkbewegung des Hebels 44 in Richtung des Pfeils A in Fig. 2 eine entsprechende Spannbewegung, die auf den Bolzen 40 aufgebracht wird. Da der Bolzen 40 auf Seiten des linken Anschlagemittels 30 in die dortige Gewindebohrung 38 axial unbeweglich eingeschraubt ist, bewirkt diese Spannbewegung eine Bewegung des Flansches 34 auf das linke Anschlagemittel 30 zu bzw. von diesem weg, wobei der Spalt 36 entsprechend verkleinert oder vergrößert wird. Hierdurch kann der Innenumfang des Wandabschnitts 24 gegen den Außenumfang des oberen Endabschnitts 12a-3 des Außenrohrs 12a-1 gepresst werden, sodass der obere Endabschnitt 12a-3 in der Steckbuchse 26 eingeklemmt und damit lagefixiert werden kann. Eine Bewegung des Hebels 44 in Richtung des Pfeils B in Fig. 2 bewirkt die Lösebewegung zwischen Flansch 34 und linkem Anschlagemittel 30, sodass der Schlitz 36 auf Grund der materialinhärenten Elastizität geweitet wird und der Innenumfang des Wandabschnitts 24 den Außenumfang des oberen Endabschnitts 12a-3 zumindest soweit freigibt, dass das Außenrohr 12a-1 gegenüber der Steckbuchse 26 und damit gegenüber dem Stützbeschlag 18 verschoben werden kann, vollständig aus der Steckbuchse 26 herausgezogen werden kann oder in letztere eingeführt werden kann.

In der Draufsicht von Fig. 2 ist ein Bauteil 52 dargestellt, welches im Bereich des in Fig. 2 linken Anschlagemittels 30 an diesem befestigbar ist. Hierzu weist das linke Anschlageteil 30 eine oder mehrere (außerhalb der Schnittebene von Fig. 2) liegende Bohrungen auf, in welche Schrauben einschraubbar sind. Zusätzlich oder alternativ können auch fixierende Stifte verwendet werden.

Das in Fig. 2 rechte Anschlagemittel 28 dient in analoger Weise dazu, ein weiteres Bauteil 58 an dem Beschlagkörper 20 zu befestigen. Hierzu weist das rechte Anschlagemittel 28 Bohrungen 60 und 62 auf, in welche Schrauben 64 und 66 einschraubbar sind, wobei ausweislich Fig. 2 die Anordnung der Bauteile 52 und 58 derart erfolgt, dass diese in Fluchtung miteinander sind, d.h. bei einer langgestreckten Ausbildung der Bauteile 52 und 58 liegen deren Längsmittellinien oder Längsmittelebenen L1 und L2 auf einer gemeinsamen Ebene oder Linie, welche durch den Mittelpunkt des kreisförmigen Querschnitts der Steckbuchse 26 verläuft.

Die Bauteile 52 und 58 können beispielsweise zu einem Schienenunterzug gehören, also einem tragenden Bauteil, welches sich unterhalb einer Schiene 4 bzw. 6 befindet, wenn diese Schiene aus einem Material gefertigt ist und/oder so dimensioniert ist, dass sie nicht selbsttragend im Sinne einer eigenständigen Lastaufnahme ist. Durch die Befestigung der Schienenunterzüge in Form der Bauteile 52 und 58 an dem Beschlagkörper 20 werden die von den Bauteilen 52 und 58, welche Teile des Unterzugs sind/sein können, aufgenommenen Kräfte über die Anschlagemittel 28 und 30 auf den Beschlagkörper 20 und damit das jeweilige Stützelement 12 übertragen, welches in der Steckbuchse 26 aufgenommen ist.

Die Schienen 4, 6 können auch jeweils einstückig mit den Bauteilen/Unterzügen 52 bzw. 58 ausgebildet sein.

Das in Fig. 2 untere Anschlagemittel 32 ist ebenfalls flanschförmig ausgebildet und dient zur Befestigung eines weiteren Bauteils 68. Die Befestigung des Bauteils 68 erfolgt über Schrauben 70 und 72, die in entsprechenden Bohrungen des Anschlagemittels 32 und des Bauteils 68 eingeschraubt sind. Gemäß Fig. 3 ist hierbei bevorzugt das untere Anschlagemittel 32 in Form eines Doppelflansches ausgebildet, wobei ein unteres Flanschteil 32-1 und ein oberes Flanschteil 32-2 zwischen sich einen Endabschnitt des Bauteils 68 aufnehmen. Die Schrauben 70 und 72 durchtreten dann von oben her zunächst das obere Flanschteil 32-2, dann das Bauteil 68 und schließlich das untere Flanschteil 32-1.

Gemäß einer weiteren bevorzugten Ausgestaltungsform kann die Befestigung des Bauteils 68 an dem unteren Anschlagemittel 32 auch derart erfolgen, dass gemäß Fig. 2 nur eine Schraube (Schraube 72) die beiden Flanschteile 32-1 und 32-2 und das Bauteil 68 durchsetzt.

Die sich hieraus ergebenden Vorteile werden nachfolgend noch näher erläutert.

Fig. 3 zeigt eine Ansicht auf den Beschlagkörper 20 in Richtung des Pfeils III in Fig. 2. Die Einbaulage des Beschlagkörpers 20 in der Praxis entspricht einer Lage, die bei Drehung der Darstellung von Fig. 3 um 90 Grad entgegen Uhrzeigersinn erhalten wird, sodass der Hebel 44 links und das Bauteil 68 rechts zu liegen kommt. In dieser Lage ist eine als Oberseite 74 definierte Seite und eine als Unterseite 76 definierte Seite des Beschlagkörpers 20 gegeben, wobei sich zwischen Oberseite 74 und Unterseite 76 die Anschlagemittel 28, 30 und 32 in Umfangsrichtung voneinander beabstandet befinden. Ebenfalls liegt der Hebel 44 an der dem Anschlagemittel 32 gegenüberliegenden Umfangsseite des Beschlagkörpers 20.

Im Bereich der Oberseite 74 des Beschlagkörpers 20 verschließt eine Stirnwand 78 die Steckbuchse 26. Im Bereich der Stirnwand 78 ist eine Auflagefläche 80 definiert, die in ihrer Form zumindest an einen Teilbereich der Umfangskontur der Schiene 4 oder 6 für eine Flächenanlage hiermit angepasst ist. Im Ausführungsbeispiel der Figuren mit einem kreisrunden Querschnitt der Schienen 4 oder 6 bedeutet dies, dass die Auflagefläche 80 die Form eines langgestreckten Trogs mit zwei offenen Endseiten und einem kreissegmentförmigen Boden hat. Die beiden offenen Endseiten öffnen sich in Fig. 2 nach links und rechts, sodass die Auflagefläche 80 eine langgestreckte Form aufweist, deren Längenerstreckung in Fig. 2 einer Breite B des Anschlagemittels 32 entspricht. Der tiefste Punkt der Auflagefläche 80 im Querschnitt fällt mit dem Mittelpunkt des Kreisquerschnitts der Schiene 4 bzw. 6 zusammen, sowie mit dem Mittelpunkt P des Kreisquerschnitts der Steckbuchse 26. Eine Längsachse L3 des Stützbeschlags 18 verläuft somit im Wesentlichen durch den Flächenschwerpunkt der Auflagefläche 80.

Die Stirnwand 78 kann ein Widerlager für die Auflage auf der Stütze 12 darstellen.

Im Bereich der Stirnwand 78 kann eine oder können mehrere Befestigungsbohrungen 82 ausgebildet sein, mit denen die Schiene 4 bzw. 6 durch eine von der Steckbuchse 26 her eingeführte Verschraubung an der Auflagefläche 80 fixierbar ist.

Zur Anbindung des Beschlagkörpers 20 an die Schiene 4 oder 6 wird die Schiene 4 auf die Auflagefläche 80 gelegt und über die Bohrung oder die Bohrungen 82 mit dem Beschlagkörper 20 verschraubt. Weist hierbei die Schiene 4 oder 6 zusätzlich einen Unterzug auf, wird dieser Unterzug auf einer Seite über die Schrauben 64 und 66 mit dem rechten Anschlagemittel 28 verschraubt und ein weiterer Unterzug wird mit dem Anschlagemittel 30 über Schrauben verschraubt.

Das Bauteil 68, welches als Traverse oder Schwelle zwischen zwei parallel zueinander verlaufenden Schienen 4 bzw. 6 angeordnet ist, erstreckt sich zu einem benachbarten Beschlagkörper 20, der die zweite Schiene des das Gleis 2 bildenden Schienenpaars trägt.

Ausweislich Fig. 1 wird somit eine Mehrzahl von Beschlagkörpern 20 in den jeweils notwendigen Abständen fortlaufend mit den jeweiligen Schienen verschraubt. Zwischen den einzelnen Beschlagkörpern 20 sind die Bauteile 68 bzw. Schwellen 8 angeordnet.

In die jeweiligen Beschlagkörper 20 bzw. deren Steckbuchsen 26 sind von unten her die Stützelemente 12 bzw. deren obere Endabschnitte 12a-3 eingeführt, so dass die Schienen 4 und 6 des Schienensystems oder Gleises 2 gegenüber dem Untergrund 10 abgestützt werden können.

Dadurch, dass gemäß den Figuren 5, 6 und 7 Stützelemente 12 unterschiedlicher Grundlänge und/oder mit unterschiedlich großem Teleskopierbetrag nach Bedarf mit den jeweiligen Beschlagkörpern 20 bzw. deren Steckbuchsen 26 verbunden werden können, kann etwa gemäß Fig. 5 eine Anpassung an unterschiedlichste Profile des Untergrunds 10 derart erfolgen, dass das Gleis 2 in der Ebene E ausgerichtet verbleibt.

Durch die Auswahl unterschiedlich langer Stützelemente 12 gemäß Fig. 7 und/oder durch unterschiedliche Teleskopierbeträge zwischen Außenrohr 12a-1 und Innenrohr 12a-2 kann zumindest eine Grobanpassung oder Grobnivellierung des Gleises 2 erfolgen. Eine Feinanpassung oder Feinnivellierung des Gleises 2 erfolgt dann durch individuelles Verschieben der oberen Endabschnitte 12a-3 im Inneren der jeweiligen Steckbuchsen 26 bei gelöstem Hebel 44. Ist die erforderliche Relativlage zwischen oberem Endabschnitt 12a-3 und Steckbuchse 26 erreicht, wird der Hebel 44 in seine Klemmstellung gemäß Fig. 2 gebracht, sodass der obere Endabschnitt 12a-3 gegenüber der Steckbuchse 26 festgelegt ist.

Hierdurch ist es möglich, eine präzise und schnelle Ausrichtung des Gleises 2 gegenüber dem Untergrund 10 zu erhalten. Bei einem selbsttragenden Schienensystem, welches unbelastet im Wesentlichen keinen Durchhang zeigt, kann die Feinnivellierung dadurch erreicht werden, dass etwa gemäß Fig. 5 zwei der Stützelemente (Stützelemente 12-1 und 12-2) so eingestellt und ausgerichtet werden, dass der zugehörige Gleisabschnitt exakt ausgerichtet ist. Das verbleibende Stützelement 12-3 (oder weitere zwischen den Stützelementen 12-1 und 12-2 liegende Stützelemente) werden dann nach grober Abmessung aus dem Fundus (Fig. 7) ausgewählt und/oder teleskopierend eingestellt und in die Steckbuchse 26 des zugehörigen Beschlagkörpers 20 eingeführt. Das Stützelement 12-3 fällt dann unter Schwerkrafteinfluss bei gleichzeitiger Verschiebung des oberen Endabschnitts 12a-3 in der Steckbuchse 26 soweit nach unten, bis sein unteres freies Ende den Untergrund 10 berührt. In dieser Stellung des Stützelementes 12-3 wird der Hebel 44 in seine Klemm- oder Spannstellung gebracht.

Fig. 5 zeigt weiterhin, dass bei Bedarf zwischen einzelnen Stützelementen 12 aussteifende Traversen 84 verlegt werden können. Derartige Traversen können unter Umständen auch zwischen einander benachbarten Stützelementen 12 diagonal verlaufend eingezogen werden, wenn die Bauteile 68 bzw. Schwellen 8 nicht für hinreichende Stabilität zwischen den Schienen 4 und 6 sorgen können.

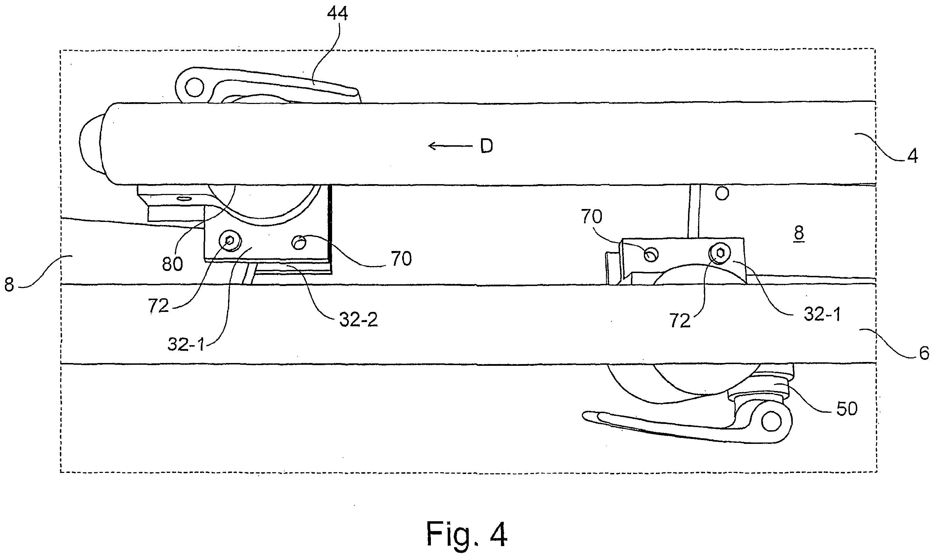

Bei der weiter oben angesprochenen Ausgestaltungsmöglichkeit, bei der das Bauteil 68, d.h. die Schwelle 8 nur mit einer Schraube (Schraube 72) an dem flanschartigen Anschlagemittel 32 befestigt wird, kann die Schwelle 8 gegenüber dem Beschlagkörper 20 verschwenkt werden. Hierdurch ist es möglich, die beiden Schienen 4 und 6 gemäß Fig. 4 unter Verschwenkung der dazwischen liegenden Schwellen 8 in eine eng benachbarte Ausrichtung zueinander zu bringen, sodass Transport und Lagerung des Schienensystems 2 vereinfacht sind.

Zur Aufstellung vor Ort werden Schienen 4 und 6 auf den korrekten Abstand zueinander gebracht, indem die Schwellen 8 um die Schrauben 72 schwenken, bis Fluchtung im Bereich der freien Durchgangsbohrungen zwischen den beiden Flanschteilen 32-1 und 32-2 und der Schwelle 8 erzielt worden ist. In der Darstellung von Fig. 4 würde dies eine Bewegung der Schiene 4 in Richtung des Pfeils D relativ zur Schiene 6 bedeuten. Die Schwelle 8 schwenkt hierbei um die Schraube 72. Analog schwenkt die in Fig. 4 rechte Schwelle 8 um die Schraube 72. In der Endstellung haben die beiden Schienen 2 und 4 den korrekten Abstand, wobei dieser Abstand und die Parallelität der Schienen 2 und 4 durch die als reine Abstandshalter dienenden Schwellen 8 aufrechterhalten wird.

Nachfolgend werden die benötigten Stützelemente 12 in die Steckbuchsen 26 der Beschlagkörper 20 eingeführt und einjustiert, um eine Nivellierung des Gleises 2 zu erreichen.

Beim Gegenstand der vorliegenden Erfindung erfolgt die Kraftübertragung von den Schienen 4 und 6 bevorzugt, jedoch nicht ausschließlich direkt auf die darunterliegenden Stützelemente 12, da die Längsachse (L4 in Fig. 6) der Stützelemente 12 im Wesentlichen durch den Flächenschwerpunkt der Auflagefläche 80 verläuft. Bei einer Belastung der Schienen 4 und 6 sind daher die Schwellen 8 keinerlei Biegemomenten ausgesetzt, sodass die Schwellen 8 eine reine Abstandhalterfunktion ausüben können. Hierdurch ist es möglich, die Schwellen 8 entsprechend leicht auszugestalten und/oder zu dimensionieren, sodass das gesamte Schienensystem bestehend aus den beiden Schienen 4 und 6 und einer Anzahl dazwischen verlaufender Schwellen 8 entsprechend leichter und preiswerter wird. Da die Schwellen 8 keine Biegemomente aufnehmen müssen und nicht zur die Gewichtskräfte tragenden Konstruktion des Schienensystems 2 gehören, ist es möglich, auch die Schwellen 8 teleskopierbar (gegebenenfalls in Rasterschritten) auszuführen, sodass der Abstand zwischen den beiden Schienen 4 und 6 stufenweise einstellbar ist, um damit eine Veränderung der Spurweite des Schienensystems zu erreichen. Auf Grund der nichttragenden Funktion der Schwellen 8 können die hierzu gehörigen Verstellmittel entsprechend einfach und preiswert ausgestaltet werden.

Mit der Ausführungsform, bei der der Beschlagkörper zwischen Ober- und Unterseite wenigstens ein Anschlagemittel für im wesentlichen in der gleichen Ebene wie die Schiene verlaufende Verbindungsbauteile aufweist; und der Beschlagkörper außerhalb einer Vertikalebene der Schiene direkt oder indirekt an dieser festlegbar ist, lassen sich im wesentlichen die selben Vorteile wie bei der oben geschilderten Ausführungsform erzielen. Der wesentliche Unterschied liegt darin begründet, dass der Beschlagkörper nicht direkt unterhalb der Schiene bzw. dem Unterzug derart liegt, dass die Längsachse des Stützmittels mit der Vertikalebene der Schiene/des Unterzugs fluchtet. Vielmehr liegt der Beschlagkörper außerhalb besagter Ebene, so dass der Mittelpunkt P außerhalb der Längsmittelebene L1 bzw. L2 liegt, also in Fig. 2 z.B. in Richtung des Hebels 44, d.h. in Richtung Außenseite des späteren Schienensystems 2 verschoben wird. Der Beschlagkörper wird somit seitlich an der Schiene oder dem Unterzug befestigt und die Krafteinleitung bzw. Kraftübertragung von Gewichtskräften, welche auf die Schienen 4 und 6 wirken, erfolgt über die seitlich von der Schiene/dem Unterzug liegende Steckbuchse 26 auf das Stützelement ohne Beteiligung einer Traverse oder Schwelle 8, sodass sich an den mit der vorliegenden Erfindung erzielbaren Vorteilen im Wesentlichen nichts ändert. Insofern treffen die oben unter Bezug auf das erste Ausführungsbeispiel gemachten Ausführungen gleichermaßen auch auf das zweite Ausführungsbeispiel zu; eine vollinhaltliche Merkmalsübertragung aus dem schriftlichen und zeichnerischen Offenbarungsgehalt- sofern dies von technischen Gesichtspunkten her angezeigt erscheint - des ersten auf das zweite Ausführungsbeispiel wird hiermit ausdrücklich erklärt, um unnötige Widerholungen zu vermeiden.

In der geschilderten bevorzugten Ausführungsform stellen die Stützbeschläge 18 bzw. Beschlagkörper 20 funktionell Knoten dar, wo alle auf das Schienensystem 2 einwirkenden Kräfte zusammenlaufen und auf die vertikal darunterliegenden Stützelemente 12 abgeleitet werden. Dies ermöglicht einen hohen Grad an Funktionalität, gepaart mit Standfestigkeit, Sicherheit und exakter Nivellierbarkeit.

Die Ausbildung der Stützelemente 12 in Form teleskopierbarer Rohre stellt aus Kostenund Gewichtsgründen eine bevorzugte Ausgestaltungsform dar. Es sind jedoch auch andere Ausgestaltungsmöglichkeiten denkbar, beispielsweise eine stufenlos arbeitende Schraubverstellung zwischen Außenrohr 12a-1 und Innenrohr 12a-2. Ebenfalls ist es möglich, anstelle einer rohrförmigen Ausgestaltung des Stützelements 12 eine Scherenhubmechanik 112 mit einer Spindel 114 gemäß Fig. 7 zu verwenden.

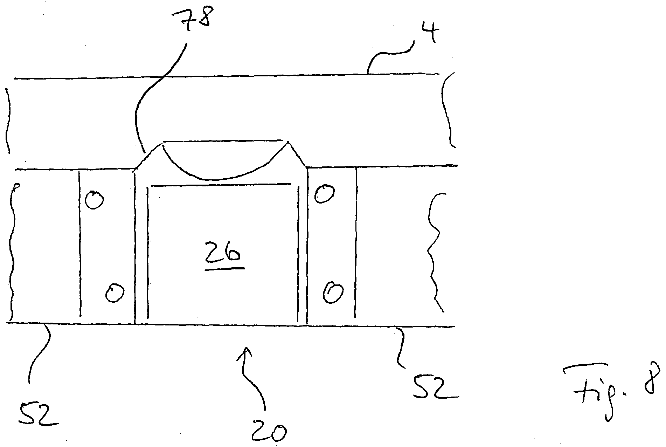

Fig. 8 zeigt schematisch eine Teilansicht eines weiteren Ausführungsbeispiels der Erfindung. Danach fluchtet die Unterseite des die Steckbuchse 26 begrenzenden Beschlagkörpers 20 mit der Unterseite von Unterzügen 52, 52. Ist keine Stütze 12 in die Steckbuchse 26 eingesteckt, so kann das Schienensystem mit der Unterseite der Unterzüge 52 auf dem Boden aufliegen, ohne daß der Beschlagkörper 20 stören würde. Dadurch ist eine Anordnung des Schienensystems in minimaler Höhe möglich. Die ein Widerlager darstellende Stirnwand 78 sollte möglicht nahe unterhalb der Schienenoberseite liegen, was hinsichlich der Momentenaufnahme Vorteile hat und überdies die Möglichkeit eröffnet, kurze teleskopierbare Teile der Stütze 12 ohne Beeinträchtigung der Höhe über Boden in der Steckbuchse 26 zu montieren.

## Patentansprüche

1. Schienensystem, insbesondere für einen Kamerawagen, gebildet aus zwei im Wesentlichen äquidistant zueinander und im Wesentlichen horizontal verlaufenden Tragund Führungsschienen (4, 6), deren Abstand durch dazwischen verlaufende Schwellen (8) eingestellt und aufrechterhalten wird, mit einem Stützbeschlag (18) zum höhenverstellbaren Abstützen der Trag- und Führungsschienen (4, 6), wobei der Stützbeschlag (18) einen Beschlagkörper (20) aufweist,
der im Bereich einer als Oberseite (74) definierten Seite eine Auflagefläche (80) zum direkten oder indirekten Unterfangen der Trag- und Führungsschienen (4, 6) aufweist; und
der an einer als Unterseite (76) definierten, der Oberseite (74) gegenüberliegenden Seite Aufnahme- und/oder Befestigungsmittel (26) zum Festlegen wenigstens eines Stützelementes (12; 112) aufweist, mit welchem der Stützbeschlag (18) gegenüber einer Standfläche (10) in einer bestimmten Höhenlage abstützbar ist, und wobei
der Beschlagkörper (20) zwischen der Ober- und Unterseite wenigstens ein Anschlagemittel (28, 30, 32) für im Wesentlichen unter der Auflagefläche (80) verlaufende Verbindungsbauteile (52, 58, 8, 68) aufweist,
**dadurch gekennzeichnet, dass**
wenigstens drei Anschlagemittel (28, 30, 32) vorgesehen sind, wobei zwei (28, 30) hiervon in einer mit einer Längsachse der Auflagefläche (80) fluchtenden Ebene (L1, L2) liegen und das dritte im rechten Winkel hierzu steht.

2. Schienensystem nach Anspruch 1, **dadurch gekennzeichnet, dass** die Tragund Führungsschienen (4, 6) zur Verstärkung einen Unterzug hat, an dem der Stützbeschlag (18) außerhalb einer Vertikalebene der Trag- und Führungsschienen (4, 6) befestigt oder befestigbar ist.

3. Schienensystem nach Anspruch 1 oder 2, **dadurch gekennzeichnet, dass** beim direkten Unterfangen der Trag- und Führungsschienen (4, 6) die Auflagefläche (80) an zumindest einen Teilbereich der Schienenumfangskontur für eine Flächenanlage hiermit angepasst ist.

4. Schienensystem nach Anspruch 1 oder 2, **dadurch gekennzeichnet, dass** beim indirekten Unterfangen der Trag- und Führungsschienen (4, 6) die Auflagefläche (80) an zumindest einen Teilbereich eines Unterzugs (52, 58) der Trag- und Führungsschienen (4, 6) für eine Flächenanlage hiermit angepasst ist.

5. Schienensystem nach einem der vorangehenden Ansprüche, **dadurch gekennzeichnet, dass** die Unterseite der Aufnahme- und/oder Befestigungsmittel (26) oberhalb der Unterseite der Trag- und Führungsschienen (4, 6) eines Unterzugs (52, 58) der Schiene und/oder einer Schwelle (8, 68) liegt oder mit der Unterseite eines der genannten Elemente (4, 6, 8, 52, 58, 68) fluchtet.

6. Schienensystem nach einem der vorangehenden Ansprüche, **dadurch gekennzeichnet, dass** die Längsachse der Aufnahme- und/oder Befestigungsmittel (26) und damit des Stützelements (12; 112) im Wesentlichen durch den Flächenschwerpunkt der Auflagefläche (80) verläuft.

7. Schienensystem nach einem der vorangehenden Ansprüche, **dadurch gekennzeichnet, dass** die Aufnahme- und/oder Befestigungsmittel (26) zum Festlegen des Stützelements (12; 112) als Steckbuchse (26) ausgebildet sind, in der das Stützelement (12) derart anordenbar sind, dass seine Längsachse (L3) zur Auflagefläche (80) im Wesentlichen senkrecht steht.

8. Schienensystem nach Anspruch 7, **dadurch gekennzeichnet, dass** an der Steckbuchse (26) Klemmmittel (30, 34, 44) vorgesehen sind, mit welchen das Stützelement (12; 112) in der Steckbuchse (26) festklemmbar ist.

9. Schienensystem nach Anspruch 7 oder 8, **dadurch gekennzeichnet, dass** die Steckbuchse (26) einen Klappabschnitt hat, der über ein Scharnier an der Steckbuchse (26) klappbar befestigt ist.

10. Schienensystem nach einem der Ansprüche 1 bis 6, **dadurch gekennzeichnet, dass** das Stützelement (12; 112) über eine Schraubverbindung mit dem Aufnahme- und/oder Befestigungsmittel (26) verbindbar und einstellbar ist.

11. Schienensystem nach einem der vorangehenden Ansprüche, **dadurch gekennzeichnet, dass** die Anschlagemittel (28, 30, 32) Befestigungsflansche und/oder Befestigungsbohrungen sind.

12. Schienensystemnach einem der vorangehenden Ansprüche, **dadurch gekennzeichnet, dass** die beiden mit der Längsachse der Auflagefläche (80) fluchtenden Anschlagemittel (28, 30) an Schienenunterzügen (52, 58) befestigbar sind und dass die dritten, im rechten Winkel hierzu stehenden Anschlagemittel (32) an Schwellen (8) befestigbar sind, welche sich zwischen zueinander parallel verlaufenden Trag- und Führungsschienen (4, 6) eines Gleises (2) erstrecken.

## Claims

1. A track system, in particular for a camera dolly, formed from two bearing and guiding rails (4, 6) that are substantially equidistant from one another and running substantially horizontally, the distance between which is set and maintained by ties (8) running between them, with a support fitting (18) for height-adjustable support of the bearing and guiding rails (4, 6), the support fitting (18) comprising a fitting body (20)
which, in the region of a side defined as the upper side (74), has a bearing surface (80) for directly or indirectly underpinning the bearing and guiding rails (4, 6); and
which on a side which is defined as the lower side (76) and which is opposite the upper side (74), has receiving and/or fastening means (26) for fixing at least one support element (12; 112) with which the support fitting (18) can be supported at a certain height in relation to a base (10), and
the fitting body (20) having at least one stop means (28, 30, 32) between the upper and the lower side for connecting components (52, 58, 8, 68) substantially extending under the bearing surface (80),
**characterised in that** at least three stop means (28, 30, 32) are provided, two (28, 30) of the latter lying in a plane (L1, L2) aligned with a longitudinal axis of the bearing surface (80), and the third stop means being at a right angle to the latter.

2. The track system according to Claim 1, **characterised in that** for reinforcement the bearing and guiding rails (4, 6) have a bearer to which the support fitting (18) is fastened or can be fastened outside of a vertical plane of the bearing and guiding rails (4, 6).

3. The track system according to Claim 1 or 2, **characterised in that** in the event of directly underpinning the bearing and guiding rails (4, 6) the bearing surface (80) is matched to at least one partial region of the rail circumferential contour for a surface contact therewith.

4. The track system according to Claim 1 or 2, **characterised in that** in the event of indirectly underpinning the bearing and guiding rails (4, 6) the bearing surface (80) is matched to at least one partial region of a bearer (52, 58) of the bearing and guiding rails (4, 6) for surface contact therewith.

5. The track system according to any of the preceding claims, **characterised in that** the lower side of the receiving and/or fastening means (26) lies above the lower side of the bearing and guiding rails (4, 6), a bearer (52, 58) of the rail and/or a tie (8, 68), or is aligned with the lower side of one of the aforementioned elements (4, 6, 8, 52, 58, 68).

6. The track system according to any of the preceding claims, **characterised in that** the longitudinal axis of the receiving and/or fastening means (26), and so of the support element (12; 112), substantially extends through the centre of gravity of the area of the bearing surface (80).

7. The track system according to any of the preceding claims, **characterised in that** the receiving and/or fastening means (26) for fixing the support element (12; 112) are designed as a socket (26) in which the support element (12) can be arranged in such a manner that its longitudinal axis (L3) is substantially perpendicular to the bearing surface (80).

8. The track system according to Claim 7, **characterised in that** there are provided on the socket (26) clamping means (30, 34, 44) with which the support element (12; 112) can be clamped securely in the socket (26).

9. The track system according to Claim 7 or 8, **characterised in that** the socket (26) has a flap section which is fastened in a folding manner to the socket (26) by a hinge.

10. The track system according to any of Claims 1 to 6, **characterised in that** the support element (12; 112) can be connected to the receiving and/or fastening means (26) by a screw connection and can be adjusted.

11. The track system according to any of the preceding claims, **characterised in that** the stop means (28, 30, 32) are fastening flanges and/or fastening bores.

12. The track system according to any of the preceding claims, **characterised in that** the two stop means (28, 30) which are aligned with the longitudinal axis of the bearing surface (80) can be fastened to rail bearers (52, 58), and **in that** the third stop means (32) which are at a right angle thereto can be fastened to ties (8) which extend between bearing and guiding rails (4, 6) of a track (2) that run parallel to one another.

## Revendications

1. Système de rails, destiné notamment à un chariot de caméra, composé de deux rails de support et de guidage (4, 6) sensiblement équidistants et sensiblement horizontaux, dont l'écartement est réglé et maintenu par des traverses (8) installées entre eux, comportant une ferrure de support (18) servant au support réglable en hauteur des rails de support et de guidage (4, 6), ladite ferrure de support (18) présentant un corps de ferrure (20),
ledit corps de ferrure présentant une surface d'appui (80), pour l'étaiement direct ou indirect des rails de support et de guidage (4, 6), à proximité d'une face dite face supérieure (74), et
ledit corps de ferrure présentant, sur une face opposée à la face supérieure (74) et dite face inférieure (76), des moyens de logement et/ou de fixation (26) destinés à immobiliser au moins un élément d'appui (12 ; 112) permettant de supporter la ferrure de support (18) par rapport à une surface de pose (10) selon une hauteur définie, et
dans lequel le corps de ferrure (20) présente, entre la face supérieure et la face inférieure, au moins un moyen de butée (28, 30, 32) pour des éléments de liaison (52, 58, 8, 68) s'étendant sensiblement sous la surface d'appui (80),
**caractérisé en ce que**
le système dispose d'au moins trois moyens de butée (28, 30, 32), deux (28, 30) d'entre eux se situant dans un plan (L1, L2) de niveau avec un axe longitudinal de la surface d'appui (80) et le troisième étant à angle droit par rapport à ceux-ci.

2. Système de rails selon la revendication 1, **caractérisé en ce que** les rails de support et de guidage (4, 6) possèdent, à des fins de renforcement, un longeron sur lequel la ferrure de support (18) est ou peut être fixée à l'extérieur d'un plan vertical des rails de support et de guidage (4, 6).

3. Système de rails selon la revendication 1 ou 2, **caractérisé en ce que**, pour un étaiement direct des rails de support et de guidage (4, 6), la surface d'appui (80) est adaptée à au moins un segment partiel du contour périphérique des rails pour un contact de surface avec ceux-ci.

4. Système de rails selon la revendication 1 ou 2, **caractérisé en ce que**, pour un étaiement indirect des rails de support et de guidage (4, 6), la surface d'appui (80) est adaptée à au moins un segment partiel d'un longeron (52, 58) des rails de support et de guidage (4, 6) pour un contact de surface avec ceux-ci.

5. Système de rails selon l'une des revendications précédentes, **caractérisé en ce que** la face inférieure des moyens de logement et/ou de fixation (26) est située au-dessus de la face inférieure des rails de support et de guidage (4, 6) d'un longeron (52, 58) du rail et/ou d'une traverse (8, 68), ou bien elle est de niveau avec la face inférieure d'un desdits éléments (4, 6, 8, 52, 58, 68).

6. Système de rails selon l'une des revendications précédentes, **caractérisé en ce que** l'axe longitudinal des moyens de logement et/ou de fixation (26) et donc de l'élément d'appui (12 ; 112) passe sensiblement par le centre de gravité superficiel de la surface d'appui (80).

7. Système de rails selon l'une des revendications précédentes, **caractérisé en ce que** les moyens de logement et/ou de fixation (26) destinés à immobiliser l'élément d'appui (12 ; 112) sont conçus sous la forme d'une douille (26) dans laquelle l'élément d'appui (12) peut être disposé de manière que son axe longitudinal (L3) soit sensiblement perpendiculaire à la surface d'appui (80).

8. Système de rails selon la revendication 7, **caractérisé en ce que** des moyens de serrage (30, 34, 44) sont prévus au niveau de la douille (26) grâce auxquels il est possible de bloquer l'élément d'appui (12 ; 112) dans la douille (26).

9. Système de rails selon la revendication 7 ou 8, **caractérisé en ce que** la douille (26) présente une section rabattable qui est fixée à ladite douille (26) par une charnière de manière à pouvoir être rabattue.

10. Système de rails selon l'une des revendications 1 à 6, **caractérisé en ce que** l'élément d'appui (12 ; 112) peut être raccordé et réglé avec les moyens de logement et/ou de fixation (26) par l'intermédiaire d'une liaison à vis.

11. Système de rails selon l'une des revendications précédentes, **caractérisé en ce que** les moyens de butée (28, 30, 32) consistent en des brides de fixation et/ou des alésages de fixation.

12. Système de rails selon l'une des revendications précédentes, **caractérisé en ce que** les deux moyens de butée (28, 30) de niveau avec l'axe longitudinal de la surface d'appui (80) peuvent être fixés à des longerons de rail (52, 58) et **en ce que** les troisièmes moyens de butée (32) à angle droit avec ces derniers peuvent être fixés à des traverses (8) qui s'étendent entre les rails de support et de guidage (4, 6) parallèles d'une voie (2).
